# EUROPEAN PATENT APPLICATION

(11) **EP 0 590 749 A1**
(43) Date of publication of application: **06.04.1994**
(21) Application number: 93300059.8
(22) Date of filing: 06.01.1993
(51) Int. Cl.: B01D 29/01, B01D 29/68

(54) **Mechanism of preventing filter blocking**

(30) Priority: 28.09.1992 JP 299070/92
(71) Applicant: MATSUURA MANUFACTURING CO., LTD., Fukui-City, Fukui-prefecture (JP); I.M.N Co., Ltd., Takefu-city, Fukui-prefecture (JP)
(72) Inventor: Yamada, Kikuta, Takefu-city, Fukui-prefecture (JP); Tanaka, Seiji, Takefu-city, Fukui-prefecture (JP); Yamagata, Yoshiyuki, Takefu-city, Fukui-prefecture (JP); Kubo, Masahiro, Fukui-city, Fukui-prefecture (JP)
(74) Representative: Brunner, Michael John

(57) **Abstract**

A mechanism of preventing blocking of a filter having a large number of holes or a mesh structure and interposed in a liquid to shield solid matter moving in the liquid. A jet of air bubbles is applied to the filter from the side reverse to a side thereof which is used to shield the moving solid matter, thereby impacting or vibrating the solid matter collected or accumulated on the filter.

## Description

The present invention relates to a mechanism of preventing blocking of a filter used for shielding solid matter moving in a liquid.

To shield solid matter in a moving liquid, it has been a conventional practice to interpose a filter having a large number of holes or a mesh structure in the moving liquid to thereby shield the solid matter moving in the liquid.

In such a case, as the solid matter is shielded by the filter, it accumulates on the shield side of the filter. With the accumulation of the solid matter, the filter itself is gradually blocked up and hence obstructs the passage of the moving liquid.

Accordingly, the prior art unavoidably involves the problem that it is necessary to remove the accumulated solid matter and replace the filter frequently.

In view of the above-described problem of the prior art, it is an object of the present invention to provide an arrangement which prevents blocking of a filter even if solid matter accumulates thereon, and hence enables the filter to be effectively used for a long time without frequently replacing it with a new one or removing the solid matter accumulated thereon.

To attain the above-described object, the present invention provides a mechanism of preventing blocking of a filter having a large number of holes or a mesh structure and interposed in a moving liquid to shield solid matter moving in the liquid, wherein a jet of air bubbles is applied to the filter from the side reverse to a side thereof which is used to shield the moving solid matter.

In the accompanying drawings:-
Figs. 1(a) and 1(b) are sectional views showing the operating principle of the present invention.
Fig. 2 is a sectional side view showing the arrangement of one embodiment of the present invention.
Fig. 3 is a perspective view of a chip pan used in the embodiment of the present invention.

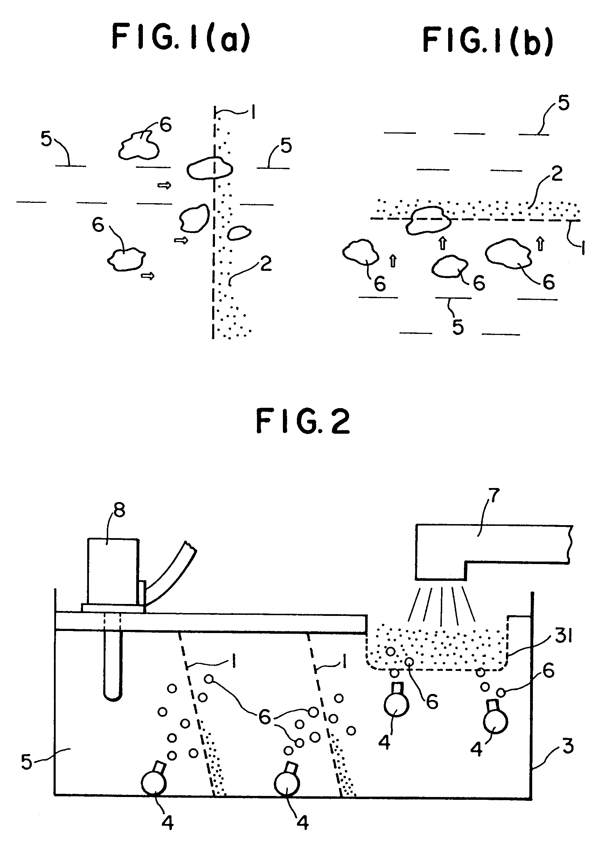

Referring to Figs. 1(a) and 1(b), which are sectional views showing the basic principle of the present invention, solid matter 2 that moves together with a liquid 5 is shielded by a filter 1. If a jet of air bubbles 6 is applied to the filter 1 from the side reverse to a side thereof which is used to shield the solid matter 2, the bubbles 6 impact or vibrate the solid matter 2 that is collected or accumulated on the shield side of the filter 1. As a result, gaps are produced between the solid matter 2 and the holes or mesh openings of the filter 1, so that it becomes possible for the liquid 5 to pass through the filter 1 again.

If the air bubbles 6 are jetted out at high speed, or if a jet of compressed air bubbles 6 is applied, large impact force is obtained, so that blocking is prevented even more effectively.

The required jet speed or degree of compression of the air bubbles 6 depends on the size of solid matter 2 which may accumulate and the angle at which the filter 1 is installed.

That is, as the size of the solid matter 2 increases, the required jet speed or degree of compression increases. In comparison of a case where the filter 1 is provided vertically, and the solid matter 2 collects or accumulates on one side thereof, as shown in Fig. 1(a), with a case where the filter 1 is provided horizontally, and the solid matter 2 accumulates thereon, as shown in Fig. 1(b), the latter needs a higher jet speed or a higher degree of compression.

Fig. 2 shows a mechanism of preventing blocking of filters 1 in a cutting fluid tank 3, as a typical embodiment that employs the mechanism of the present invention.

When machining is effected by using a machine tool, metal cutting chips 2 are generated inevitably. The cutting chips 2 are carried into the cutting fluid tank 3, together with a cutting fluid 5. In the tank 3, the cutting chips 2 are shielded, and the filtered cutting fluid 5 is recirculated to the machine tool. In the cutting fluid tank 3, a chip pan 31, which is a container for collecting coarse cutting chips 2 is disposed at the inlet, as shown in Fig. 2, and one or a plurality of filters 1 are disposed inside the tank 3 in order to shield fine cutting chips 2.

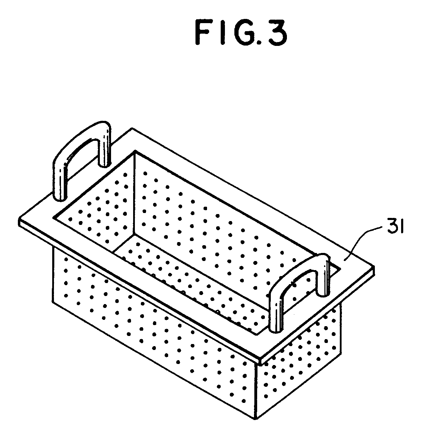

The chip pan 31 per se comprises a filter-like container having a larger number of holes, as shown in Fig. 3.

The mechanism of the present invention may be applied to the cutting fluid tank 3, having the described arrangement. That is, if air nozzles 4 are disposed at the respective sides of the filters 1 and the chip pan 31, which are reverse to the shield sides, and jets of air bubbles 6 are applied to them, it is possible to prevent blocking of the chip pan 31 and the filters 1 on the basis of the principle of the present invention, described above.

Thus, it is not necessary to replace the chip pan 31 itself so frequently as it has been in the prior art, and it is possible to prevent overflow of the cutting fluid 5 from the chip pan 31, which would otherwise occur when the operator neglects to replace the chip pan 31 frequently. In addition, since blocking of the filters 1 is prevented, it becomes possible for the cutting fluid 5 to move in the tank 3 without frequently replacing the filters 1 or removing the cutting chips 2 accumulated thereon.

As has been described above, the present invention makes it possible to prevent blocking of a filter and hence allows a moving liquid to pass through it without frequently replacing the filter or removing the solid matter accumulated or collected thereon. Accordingly, it becomes possible to use the filter even more efficiently than in the prior art. Thus, marked improvements are recognized in terms of labor and economy.

## Claims

1. A mechanism of preventing blocking of a filter having a large number of holes or a mesh structure and interposed in a liquid to shield solid matter moving in said liquid, wherein a jet of air bubbles is applied to said filter from a side reverse to a side thereof which is used to shield said moving solid matter.

2. A filter blocking preventing mechanism according to Claim 1, wherein an air nozzle for emitting a jet of air bubbles is provided for a filter, which is provided in a cutting fluid tank for storing a cutting fluid and cutting chips, to shield fine powder-shaped cutting chips.

3. A filter blocking preventing mechanism according to Claim 1, wherein a speed of air bubbles jetted out is adjusted in accordance with both a size of solid matter that may cause blocking and an angle at which said filter is installed.

4. A filter blocking preventing mechanism according to Claim 1, wherein a degree of compression of air bubbles jetted out is adjusted in accordance with both a size of solid matter that may cause blocking and an angle at which said filter is installed.
